# EUROPÄISCHE PATENTSCHRIFT

(11) **EP 3 246 590 B1**
(45) Veröffentlichungstag und Bekanntmachung des Hinweises auf die Patenterteilung: **04.03.2020**
(21) Anmeldenummer: 17171297.9
(22) Anmeldetag: 16.05.2017
(51) Int. Cl.: F16D 65/12

(54) **NUTZFAHRZEUGBREMSSCHEIBE UND BREMSSYSTEM**
BRAKE DISC OF A COMMERCIAL VEHICLE AND BRAKE SYSTEM
DISQUE DE FREIN D'UN VÉHICULE UTILITAIRE ET GARNITURE DE FREIN

(30) Priorität: 19.05.2016 DE 102016109182
(43) Veröffentlichungstag der Anmeldung: 22.11.2017
(73) Patentinhaber: SAF-HOLLAND GmbH, 63856 Bessenbach (DE)
(72) Erfinder: Hartmann, Mark, 63834 Sulzbach am Main (DE)
(74) Vertreter: Müller Schupfner & Partner Patent- und Rechtsanwaltspartnerschaft mbB

(56) Entgegenhaltungen:
- DE-A1- 2 331 315
- DE-A1- 10 355 204
- DE-A1- 19 524 144
- DE-A1-102004 049 559
- DE-U1-202009 001 742

## Beschreibung

Die vorliegende Erfindung bezieht sich auf eine Nutzfahrzeugbremsscheibe, sowie auf ein Bremssystem.

Einen Schwerpunkt bei der Entwicklung von Scheibenbremsen bildet deren Wärmemanagement. So wird, wie bei allen Reibungsbremsen, auch bei Scheibenbremsen die kinetische Energie des Fahrzeugs beim Bremsvorgang vollständig in Wärme umgewandelt. Diese Wärmeenergie wird zunächst hauptsächlich in der Bremsscheibe gespeichert, wodurch sich diese erwärmt. Zur besseren Wärmeabfuhr ist es aus dem Stand der Technik bekannt, Scheibenbremsen innen zu belüften. Damit wird die Fläche zur Abgabe der Wärme an die Luft vergrößert und bei einer Rotation der Bremsscheibe durch die Zentrifugalkraft ein Luftstrom erzeugt. Als Nachteile können die größere Baubreite und das höhere Gewicht genannt werden. Bekannt ist es auch, Lochungen vorzusehen, um den Wärmeeintrag beim Bremsen besser beeinflussen zu können. In der Regel geht dies aber mit einem erhöhten Belagverschleiß einher. Auch Schlitzungen auf der Scheibenoberfläche sind möglich, um eine bessere Belüftung und einen verbesserten Abtransport von Nässe zu erzielen.

Tatsächlich konnte bislang aber noch keine Konfiguration gefunden werden, welche höchstmögliche Standfestigkeit mit ausgezeichnetem thermischen Verhalten verbindet.

Die DE 195 24 144 A1 befasst sich mit Rillenscheibenbremsen für Kraftfahrzeuge. Die DE 103 55 204 A1 befasst sich mit Spiralscheibenbremsen für Kraftfahrzeuge.

Die DE 23 31 315 offenbart eine Planscheibenkupplung oder eine Planscheibenbremse für Schaltgetriebe.

Die DE 10 2004 049 559 A1 betrifft eine auf Haftreibung arbeitende Bremse für Fahrzeuge und Maschinen, deren Reiterflächenoberflächen vergrößern Strukturen aufweisen.

Die DE 20 2009 001 52 U1 zeigt eine Bremsscheibe für eine Scheibenbremse, insbesondere für eine Kraftfahrzeugscheibenbremse, mit zwei Reibringen, wobei die beiden Reibringe an ihren Stirnseiten jeweils eine reife Fläche aufweisen und zwischen den beiden Reibringen mindestens ein Kühlluftkanal ausgebildet ist.

Es ist daher Aufgabe der vorliegenden Erfindung, eine Bremsscheibe, insbesondere für Nutzfahrzeuge, sowie einen Bremsbelag anzugeben, welche die vorgenannten Nachteile beseitigen und welche standfest und höchst belastbar sind.

Diese Aufgabe wird durch eine Nutzfahrzeugbremsscheibe gemäß Anspruch 1 sowie durch ein Bremssystem gemäß Anspruch 11 gelöst. Weitere Vorteile und Merkmale ergeben sich aus den Unteransprüchen sowie der Beschreibung und den beigefügten Figuren.

Erfindungsgemäß umfasst eine Bremsscheibe, insbesondere für Nutzfahrzeuge, eine Reibscheibe, welche eine Reibfläche aufweist, wobei die Reibscheibe zumindest eine Vertiefung umfasst, welche an der Reibfläche eine, insbesondere geschlossene, Kontur formt, und wobei die Kontur bzw. der Verlauf der Kontur durch zumindest eine Ausnehmung unterbrochen ist. Durch eine Positionierung von Ausnehmungen, gerade im Auslauf der Vertiefung(en), kann vorteilhafterweise einem Verkanten des anliegenden Bremsbelags entgegengewirkt werden, da eventuell entstehende Grate am Rand der Belagelemente des Bremsbelags abgenommen werden können. Durch die Positionierung der Vertiefung bzw. mehrerer Vertiefungen sowie der zumindest einen Ausnehmung kann gezielt Einfluss auf das Hitzeriss- und Schirmverhalten sowie die Eigenfrequenzen als auch den damit einhergehenden Eigenformen der Bremsscheibe genommen werden. Insbesondere ermöglicht das Vorsehen sowohl der Vertiefungen als auch der Ausnehmungen, dass die Oberfläche der Reibscheibe vergrößert wird, um so die mögliche Wärmeabstrahlung zu erhöhen. Durch die spezifische Lage der Ausnehmungen relativ zu den Vertiefungen wird aber zusätzlich erreicht, dass die Bremsscheibe äußerst standfest ist. Ermöglicht wird dies insbesondere dadurch, dass die Ausnehmung im Bereich der Kontur der Vertiefung angeordnet ist bzw. die Kontur, insbesondere deren Verlauf, sozusagen "stört" oder "unterbricht". Durch den von den Ausnehmungen "gestörten" Verlauf der Konturen wird darüber hinaus auch noch eine Verwirbelung des umgebenden Fluids erreicht, wodurch eine Sekundärströmung induziert wird, welche den Wärmeabtransport steigert. Vorteilhafterweise ist die Reibscheibe als Reibring ausgebildet.

Vorteilhafterweise weist die Vertiefung eine geringere Tiefe auf, als die Ausnehmung. Hierdurch wird ein gewisses Mindestmaß für die Standfestigkeit der Bremsscheibe sichergestellt. Mit Tiefe ist dabei insbesondere der maximale Abstand senkrecht zur Reibfläche der Ausnehmung und/oder der Vertiefung gemeint. Besonders bevorzugt durchdringt die Vertiefung die Reibscheibe dabei nicht vollständig, um die Standfestigkeit der Bremsscheibe nicht zu verringern. Zweckmäßigerweise weist die Ausnehmung bzw. die zumindest eine Ausnehmung einen Mittelpunkt oder eine Mittellinie auf, wobei die Kontur durch den Mittelpunkt verläuft. Wobei mit "Verlauf der Kontur" insbesondere die Projektion der Kontur auf die Reibfläche, ohne das die Ausnehmung vorhanden ist, gemeint ist. Die vorgenannte Mittellinie erstreckt sich dabei quer, vorzugsweise senkrecht, zur Reibfläche. Mit anderen Worten trennt die Kontur sozusagen die Ausnehmung in einen ersten und in einen zweiten Abschnitt. Als erster Abschnitt wird der Bereich der Ausnehmung bezeichnet, der im Bereich der Vertiefung liegt. Der zweite Abschnitt der Ausnehmung ist der Bereich, der im Bereich der Reibfläche liegt. Der Mittelpunkt der Ausnehmung kann auch versetzt zur Kontur angeordnet sein, sich also im ersten oder im zweiten Abschnitt befinden. Es hat sich hinsichtlich des Temperaturverhaltens und der Standfestigkeit als vorteilhaft erwiesen, wenn der Mittelpunkt der Ausnehmung auf der Kontur oder im zweiten Bereich angeordnet ist, beispielsweise, abhängig von einer Größe bzw. einem Durchmesser der Ausnehmung, um circa 1 bis 2 mm zum "gedachten" Konturverlauf versetzt.

Gemäß einer erfindungsgemäßen Ausführungsform weist die Ausnehmung einen runden, insbesondere einen kreisrunden, Querschnitt auf. Zweckmäßigerweise ist die Ausnehmung ein Loch oder eine Bohrung. Ein derartiges Loch kann gebohrt sein, aus Stabilitätsgründen ist es aber auch vorteilhaft, wenn es bereits bei der Herstellung der Bremsscheibe selbst (mit-)gegossen wird. Ein Durchmesser der runden, insbesondere kreisrunden, Ausnehmung liegt gemäß verschiedenen Ausführungsformen, beispielsweise in einem Bereich von etwa 1 bis 7 mm, bevorzugt in einem Bereich von etwa 2 bis 5 mm. Der Querschnitt der zumindest einen Ausnehmung kann auch oval oder eckig, wie beispielsweise dreieckig oder viereckig, ausgebildet sein. Die Kombination verschiedener Formen und Größen kann auch vorteilhaft sein, um z. B. Einfluss auf das Hitzeriss- oder Schirmverhalten zu nehmen. Da die Umfangsgeschwindigkeiten der Bremsscheibe mit zunehmendem Radius ansteigen, hat es sich als vorteilhaft erwiesen, dass die Ausnehmungen bzw. ein Querschnitt der Ausnehmungen nach außen hin, bezogen auf eine Drehachse der Bremsscheibe und damit dort, wo der Wärmeeintrag aufgrund der hohen Umgangsgeschwindigkeiten am größten ist, zunimmt.

Zweckmäßigerweise erstreckt sich die Ausnehmung im Wesentlichen senkrecht zur Reibfläche und durchdringt diese bevorzugt vollständig. Damit kann die mögliche Wärmeabstrahlung maximiert werden, da die Oberfläche so bestmöglich maximiert wird. "Im Wesentlichen senkrecht" umfasst hierbei eine Neigung der Längserstreckung der Ausnehmung zur Reibfläche von 85° bis 95°. Gemäß einer alternativen Ausführungsform durchdringt die Ausnehmung die Reibscheibe aber nicht vollständig sondern nur zu 10, 20, 50, 60, 80 oder 90 %. Die Durchdringung kann dazu verwendet werden die Eigenfrequenzen der Bremsscheibe zu beeinflussen. Besonders bevorzugt liegt die Durchdringung in einem Bereich von 30% bis 40%. Es hat sich herausgestellt, dass in diesem Bereich ein besonders guter Kompromiss zwischen Standfestigkeit und Wärmeabtrag erreicht wird.

Gemäß einer Ausführungsform weist die Vertiefung in einer radialen und/oder tangentialen Richtung der Bremsscheibe eine Breite bzw. Länge auf, welche zumindest doppelt so groß ist wie eine Breite bzw. Länge der Ausnehmung in dieser Richtung. Es können quasi zwei Ausnehmungen (an gegenüberliegend verlaufenden Konturlinien) "nebeneinander" angeordnet werden.

Alternativ kann die Ausnehmung auch derart ausgebildet sein, dass zwei z. B. parallel verlaufende Konturlinienabschnitte ein- und derselben Vertiefung, insbesondere, wenn diese z.B. rillenförmig ausgebildet ist, unterbrochen werden. Die Ausnehmung ist dann z. B. gleich oder größer als eine Breite der, insbesondere rillenförmigen, Vertiefung. Dadurch können durch die entsprechende Ausnehmung sozusagen ein erster und zwei zweite Abschnitte gebildet werden.

Gemäß einer Ausführungsform sind die Ausnehmungen entlang einer (gedachten) Linie angeordnet, welche sich von einer Drehachse der Bremsscheibe radial erstreckt, wobei die Linie bevorzugt gerade, schräg oder bogenförmig verläuft. Zweckmäßigerweise sind die Ausnehmungen also über den Umfang der Bremsscheibe und radial verteilt. Dies bedeutet, dass in Rotationsrichtung der Bremsscheibe gesehen vorzugsweise eine Vielzahl derartiger "Linien" angeordnet ist. Zweckmäßigerweise erfolgt also die Anordnung der Ausnehmungen dort, wo die Linien die Vertiefungen/Rillen treffen. Hierdurch wird ein besonders hoher Turbulenzgrad des - die Bremsscheibe umgebenden - Fluids erreicht, sodass der Wärmeübergangskoeffizient gesteigert wird.

Bevorzugterweise weist die Reibscheibe eine der bereits genannten Reibfläche gegenüberliegende weitere Reibfläche auf, welche ebenfalls zumindest eine Vertiefung aufweist, wobei die Vertiefung vorteilhafterweise derart positioniert oder dimensioniert ist, dass eine Ausnehmung den Verlauf der jeweiligen Konturen auf beiden Reibflächen unterbricht. Zweckmäßigerweise sind die Vertiefungen auf den gegenüberliegenden Reibflächen also derart versetzt zueinander angeordnet, insbesondere in radialer Richtung zur Drehachse versetzt, dass mit der gleichen Ausnehmung jeweils zumindest eine Konturlinie von zwei gegenüberliegenden Vertiefungen unterbrochen werden kann.

An dieser Stelle sei erwähnt, dass es sich bei der Bremsscheibe gegebenenfalls auch um eine innenbelüftete Bremsscheibe handeln kann. In diesem Fall würde die Bremsscheibe zwei Reibscheiben umfassen, welche jeweils mit einer entsprechenden Reibfläche versehen sind, wobei die Reibscheiben bevorzugt über eine Vielzahl von Stegen verbunden sind, um ein Belüftungssystem zu formen/bilden.

Gemäß einer Ausführungsform ist die Vertiefung eine Rille, welche dabei in sich selbst geschlossen ist. In anderen Worten bedeutet dies, dass die Rille dabei kein Ende und keinen Anfang längs ihres Verlaufs aufweist. Vorteilhafterweise weist die Rille dabei keinerlei Rotationssymmetrie bezüglich der Drehachse auf. Durch eine Ausgestaltung der Rillen in dieser Art ist sowohl eine hervorragende Wärmeabfuhr durch Strahlung als auch die Beeinflussung der Eigenfrequenzen der Bremsschreibe in einer einfachen Weise möglich. Insbesondere können hierdurch Schwingungsmoden, welche bedingt durch die vornehmliche Rotationssymmetrie der Bremsscheibe nur eine geringe Differenz in ihren Eigenfrequenzen aufweisen, im Frequenzbereich separiert werden.

In einer weitern Ausführungsform ist die Vertiefung eine Rille, welche einen geschlossenen Kreisring formt, wobei in einer radialen Richtung der Bremsscheibe bevorzugt eine Vielzahl von Rillen vorgesehen ist. Ganz allgemein weist die Reibfläche bevorzugt eine Vielzahl von Vertiefungen auf. Ein Querschnitt der Rille ist zweckmäßigerweise kreissegmentförmig oder rechteckig. Eine Tiefe der Rille beträgt zweckmäßigerweise 2 bis 7 mm, bevorzugt etwa 3 bis 6 mm. Ein Verhältnis einer Tiefe der Rille zur Dicke der Reibscheibe liegt gemäß verschiedener Ausführungsformen in einem Bereich von etwa 0,1 bis 0,4, bevorzugt auch in einem Bereich von etwa 0,2 bis 0,3. Gemäß einer Ausführungsform sind beispielsweise drei bis zehn Rillen auf der Reibfläche verteilt. Eine Breite der Rille, welche sich in radialer Richtung der Bremsscheibe erstreckt, liegt, gemäß verschiedener Ausführungsformen, beispielsweise in einem Bereich von etwa 3 bis 8 mm, bevorzugt in einem Bereich von etwa 4 bis 7 mm.

Bei den Vertiefungen kann es sich auch um Rillen handeln, welche lediglich kreisbogenförmig verlaufen, also keinen geschlossenen Kreis bilden. In Rotationsrichtung und/oder quer dazu kann eine Vielzahl derartiger Rillen vorgesehen sein. Alternativ oder zusätzlich können ein oder mehrere Rillen auch im Wesentlichen gerade verlaufen, wobei die "Gerade" nicht durch die Drehachse verläuft sondern schräg zu dieser angeordnet ist.

Gemäß einer Ausführungsform weist die Vertiefung einen Bodenabschnitt auf, wobei die Reibscheibe im Bereich des Bodenabschnitts bevorzugt einen Vorsprung oder Absatz aufweist, welcher gegenüber dem Bodenabschnitt versetzt oder erhaben ausgebildet ist und z. B. als Verschleißanzeiger wirkt. Der tiefste Punkt der Vertiefung liegt zweckmäßigerweise also unterhalb eines Mindestverschleißmaßes der Reibscheibe und es kann in der Vertiefung/Rille, beispielsweise eine Erhöhung eingebracht werden, die ähnlich wie bei einem Autoreifen auf das Erreichen des Verschleißmaßes hinweist.

Die Erfindung bezieht sich auch auf ein Bremssystem mit den Merkmalen des Anspruchs 11. Eventuell entstehende bzw. vorhandene Grate am Rand des Bremsbelags können so abgenommen werden, wodurch ein Verkanten des Bremsbelags vorteilhafterweise vermieden wird. Die Aussparung kann als Vertiefung oder Rücksprung in dem Bremsbelag ausgebildet sein. Alternativ oder zusätzlich kann der Bremsbelag auch mehrere Belagelemente umfassen, welche derart beabstandet zueinander angeordnet sind, dass entsprechende Aussparungen dazwischen gebildet werden. Die Elemente können z. B. rechteckig, dreieckig, sechseckig, rund, oval etc. ausgebildet sein. Die Belagmasse kann auch streifenförmig auf den entsprechenden Belagträger aufgebracht sein. Entscheidend ist, dass die Aussparungen so dimensioniert und positioniert sind, dass beim Anlegen, also beim eigentlichen Bremsvorgang, die zumindest eine Ausnehmung an der Reibfläche der Bremsscheibe überdeckt wird, sodass der vorteilhafte Effekt zum Tragen kommt. Weiter richtet sich die Erfindung auch auf ein Bremssystem, welches eine erfindungsgemäße Bremsscheibe und zumindest einen erfindungsgemäßen Bremsbelag umfasst.

Weitere Vorteile und Merkmale ergeben sich aus der nachfolgenden Beschreibung bevorzugter Ausführungsformen der erfindungsgemäßen Bremsscheibe sowie des erfindungsgemäßen Bremsbelags mit Bezug auf die beigefügten Figuren. Einzelne Merkmale der einzelnen Ausführungsformen können dabei im Rahmen der Erfindung miteinander kombiniert werden.

Es zeigen:
- Figur 1a: ein Segment einer Bremsscheibe, umfassend eine Vielzahl von Ausnehmungen und Vertiefungen entlang einer Rotationsrichtung gesehen;
- Figur 1b: eine Detailansicht einer Ausnehmung und einer Vertiefung;
- Figur 2: eine Schnittdarstellung einer Bremsscheibe, quer zur Rotationsrichtung gesehen;
- Figur 3: eine Ansicht eines Bremsbelags;
- Figur 4: eine Ansicht, welche das Zusammenwirken zweier Bremsbeläge mit einer Bremsscheibe zeigt.

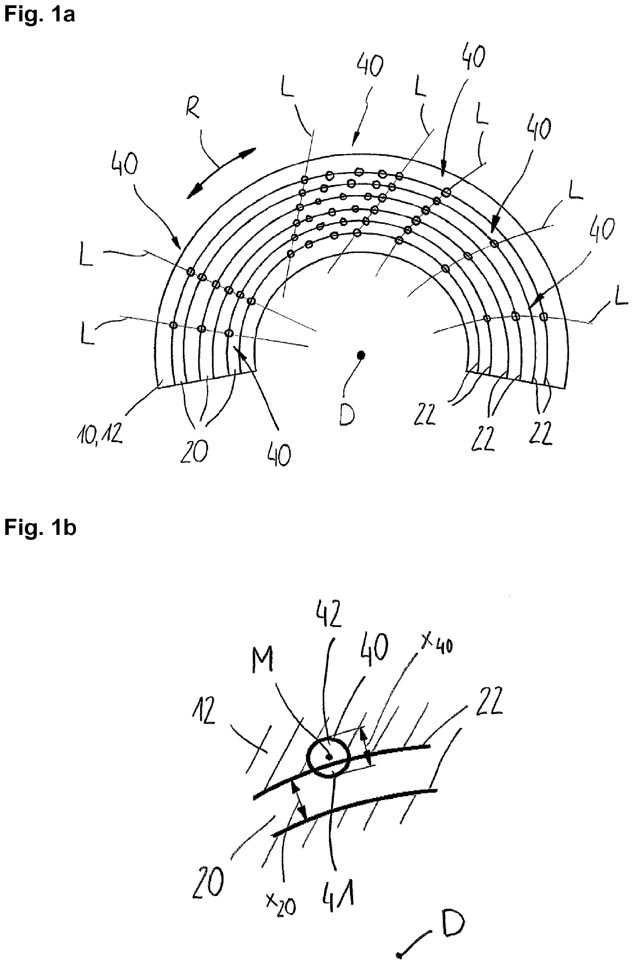

**Fig. 1a** zeigt ein Segment bzw. einen Ausschnitt einer Bremsscheibe entlang einer Drehachse D gesehen. Die Bremsscheibe dreht sich im Betrieb entlang einer Rotationsrichtung R. Die Bremsscheibe umfasst eine Reibscheibe 10, wobei in der hier gezeigten Darstellung eine Reibfläche 12 zu sehen ist. Die Reibscheibe 12 umfasst drei kreisringförmige Vertiefungen bzw. Rillen 20, welche jeweils an der Reibfläche 12 entsprechende Konturen 22 ausformen/bilden. Der Verlauf der Konturen 22 ist durch eine Vielzahl von Ausnehmungen 40 unterbrochen, wobei, schematisch dargestellt über die Linien L, verschiedene Positionierungen der Ausnehmungen 40 gezeigt sind. So können die Ausnehmungen 40 beispielsweise radial, schräg oder bogenförmig zu der Drehachse D angeordnet sein.

**Fig. 1b** zeigt eine Detailansicht einer Ausnehmung 40 sowie einer Vertiefung 20, ebenfalls in einer Draufsicht auf eine Reibfläche 12 entlang einer Drehachse D. Die Ausnehmung 40 ist in der hier gezeigten Ausführungsform rund bzw. sogar kreisrund. Die Ausnehmung 40, welche auch als Loch bezeichnet werden kann, ist beispielsweise nachträglich in die Bremsscheibe eingebracht, beispielsweise gebohrt, kann aber auch direkt beim Herstellen der Reibscheibe mit gegossen werden. Deutlich zu erkennen ist, dass eine Kontur 22 der Vertiefung 20 durch die Ausnehmung 40 unterbrochen wird. Die Ausnehmung 40 ist also direkt im Bereich der Kontur 22 und damit im Auslauf der Vertiefung bzw. Rille 20 angeordnet. Die Ausnehmung 40 umfasst eine Mittellinie bzw. einen Mittelpunkt M, welcher in der hier gezeigten Ausführungsform versetzt zur Kontur 22 angeordnet ist, insbesondere in einen zweiten Abschnitt 42 hinein versetzt. So teilt der Verlauf der Kontur 22 die Ausnehmung 40 in einen ersten Abschnitt 41 und in den zweiten Abschnitt 42. Mit dem Bezugszeichen x₂₀ ist eine Länge/Breite der Vertiefung 20 in radialer Richtung skizziert. Das Bezugszeichen x₄₀ bezeichnet eine Länge/Breite der Ausnehmung 40 in dieser Richtung, in vorliegendem Fall insbesondere einen Durchmesser. Vorteilhafterweise ist die Breite x₂₀ der Vertiefung 20 größer, beispielsweise doppelt so groß, wie die Länge x₄₀ der Ausnehmung 40.

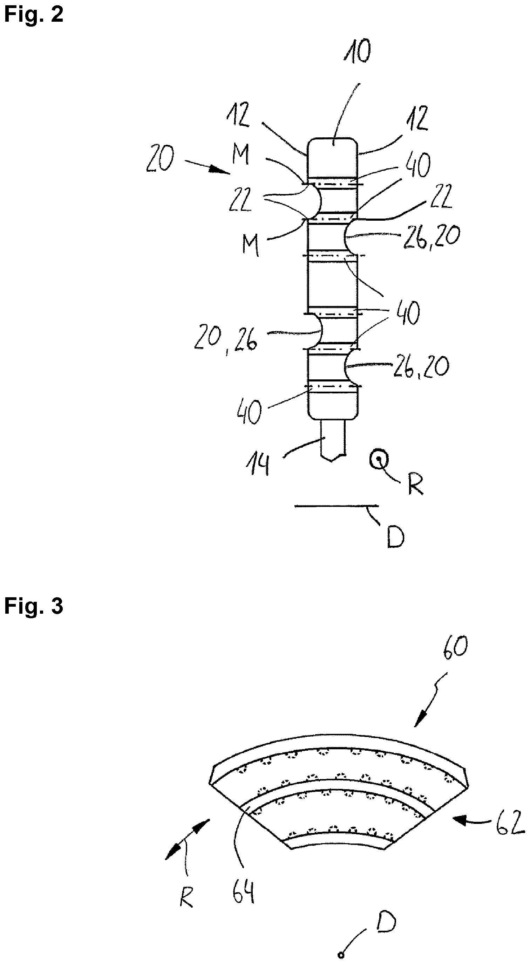

**Fig. 2** zeigt eine Schnittdarstellung einer Reibscheibe 10. Zu erkennen sind zwei Reibflächen 12 sowie ein Adapterbereich 14, welcher zur Anordnung der Bremsscheibe z. B. an einem entsprechenden Adapterflansch eines Radträgers dient. Zur Orientierung sind eine Drehachse D sowie eine Rotationsrichtung R gekennzeichnet. Beide Reibflächen 12 umfassen eine Vielzahl von Vertiefungen 20, wobei die Vertiefungen 20 derart in radialer Richtung versetzt zueinander angeordnet sind, dass über ein und dieselbe Ausnehmung 40, die Konturen 22 von gegenüberliegenden Vertiefungen 20 unterbrochen werden können, vgl. z. B. die zweite Ausnehmung 40 von oben. Erkennbar ist weiter, dass Mittellinien M der Ausnehmungen 40 in der hier gezeigten Ausführungsform im Wesentlichen auf den entsprechenden Konturen 22 der Vertiefungen 20 liegen. Die Querschnittsformen der Vertiefungen 20 sind in der hier gezeigten Ausführungsform etwa kreissegmentförmig, wobei diese in einer alternativen Ausführungsform beispielsweise auch viereckig oder rechteckig sein könnten.

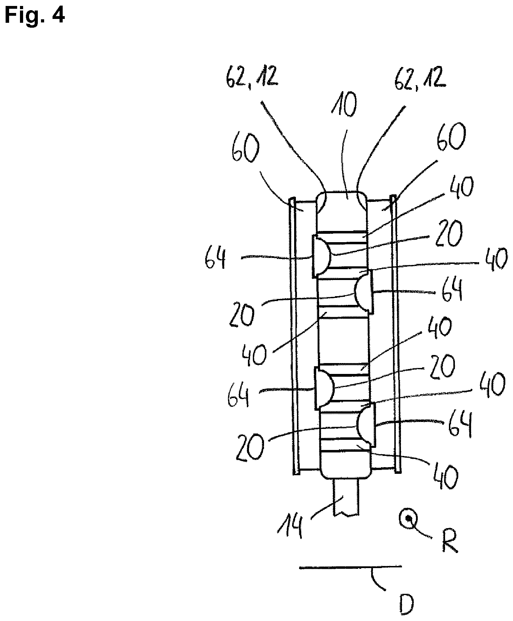

**Fig. 3** zeigt entlang einer Drehachse D gesehen einen Bremsbelag 60 umfassend eine Bremsfläche 62, welche durch zwei Belagstreifen gebildet wird. Zwischen den Belagstreifen ist eine Aussparung 64 gebildet. Die gestrichelten Halbkreise gehören nicht zum Bremsbelag 60 sondern sollen andeuten, wo die Ausnehmungen einer erfindungsgemäßen Bremsscheibe liegen könnten bzw. können, wenn der Bremsbelag 60 an einer entsprechenden Bremsscheibe verwendet wird. Das Konzept ist beispielsweise in der Figur 4 verdeutlicht.

**Fig. 4** zeigt in einer Schnittdarstellung eine Reibscheibe 10, an welcher zwei Bremsbeläge 60 angeordnet sind. Die Bremsbeläge 60 umfassen Bremsflächen 62 mit entsprechenden Aussparungen 64. Die Bremsflächen 62 liegen an Reibflächen 12 der Reibscheibe 10 an, wobei die Reibscheibe 10 eine Vielzahl von Vertiefungen 20 und Ausnehmungen 40 aufweist. Deutlich zu erkennen ist, dass die Aussparungen 64 derart angeordnet und dimensioniert sind, dass die Bremsfläche 62 die Ausnehmungen 40 zumindest bereichsweise überdeckt. In der hier gezeigten Ausführungsform weisen die beiden Bremsbeläge 60 ein durchgehendes Belagmaterial auf, welches die Bremsfläche 62 umfasst. Möglich wäre aber auch, dass das Belagmaterial lediglich in Abschnitten, beispielsweise in Streifen oder dergleichen, aufgebracht ist, sodass durch eine Positionierung der Belagstreifen entsprechende Aussparungen gebildet werden, vgl. z. B. Fig. 3.

### Bezugszeichenliste

- 10: Reibscheibe
- 12: Reibfläche
- 14: Adapterbereich
- 20: Vertiefung
- 22: Kontur
- 26: Bodenabschnitt/Grund
- 40: Ausnehmung
- 41: erster Abschnitt
- 42: zweiter Abschnitt
- 60: Bremsbelag
- 62: Bremsfläche
- 64: Aussparung
- D: Drehachse
- R: Rotationsrichtung
- M: Mittellinie/Mittelpunkt
- L: Linie
- x₂₀: Länge/Breite Vertiefung
- x₄₀: Länge/Breite Ausnehmung

## Patentansprüche

1. Nutzfahrzeugbremsscheibe
umfassend zumindest eine Reibscheibe (10), welche eine Reibfläche (12) aufweist,
wobei die Reibscheibe (10) zumindest eine Vertiefung (20) aufweist, welche an der Reibfläche (12) eine Kontur (22) formt **dadurch gekennzeichnet, dass** die Kontur (22) bzw. der Verlauf der Kontur (22) durch zumindest eine Ausnehmung (40) unterbrochen ist,
wobei die Ausnehmung (40) einen runden, insbesondere einen kreisrunden, Querschnitt aufweist.

2. Nutzfahrzeugbremsscheibe nach Anspruch 1,
wobei die Vertiefung (20) eine geringere Tiefe aufweist als die Ausnehmung (40).

3. Nutzfahrzeugbremsscheibe nach Anspruch 1 oder 2,
wobei die Ausnehmung (40) einen Mittelpunkt (M) aufweist, und
wobei die Kontur (22) durch den Mittelpunkt (M) verläuft.

4. Nutzfahrzeugbremsscheibe nach einem der vorhergehenden Ansprüche,
wobei sich die Ausnehmung (40) im Wesentlichen senkrecht zur Reibfläche (12) erstreckt, und
die Reibscheibe (10) bevorzugt vollständig durchdringt.

5. Nutzfahrzeugbremsscheibe nach einem der vorhergehenden Ansprüche, wobei die Vertiefung (20) in einer radialen und/oder in einer tangentialen Richtung der Bremsscheibe eine Breite/Länge (x₂₀) aufweist, welche zumindest doppelt so groß ist wie eine Breite/Länge (x₄₀) der Ausnehmung (40) in dieser Richtung.

6. Nutzfahrzeugbremsscheibe nach einem der vorhergehenden Ansprüche, wobei eine Vielzahl von Ausnehmungen (40) entlang einer Linie (L) angeordnet ist, welche sich von einer Drehachse (D) der Bremsscheibe radial erstreckt,
wobei die Linie (L) bevorzugt, gerade, schräg oder bogenförmig verläuft.

7. Nutzfahrzeugbremsscheibe nach einem der vorhergehenden Ansprüche, wobei die Reibscheibe (10) eine der Reibfläche (12) gegenüberliegende weitere Reibfläche (12) aufweist, welche ebenfalls zumindest eine Vertiefung (20) aufweist, und
wobei die Vertiefung (20) derart positioniert oder dimensioniert ist, dass eine Ausnehmung (40) den Verlauf der jeweiligen Konturen (22) auf beiden Reibflächen (12) unterbricht.

8. Nutzfahrzeugbremsscheibe nach einem der vorhergehenden Ansprüche, wobei die Reibfläche (12) oder die Reibflächen (12) eine Vielzahl von Vertiefungen (20) aufweisen.

9. Nutzfahrzeugbremsscheibe nach einem der vorhergehenden Ansprüche, wobei die Vertiefung (20) eine Rille ist, welche einen geschlossenen Kreisring formt.

10. Nutzfahrzeugbremsscheibe nach einem der vorhergehenden Ansprüche, wobei die Vertiefung (20) einen Bodenabschnitt (26) aufweist, und wobei die Reibscheibe im Bereich des Bodenabschnitts (26) bevorzugt einen Vorsprung oder Absatz aufweist, welcher gegenüber dem Bodenabschnitt zur Reibfläche (12) hin versetzt ist.

11. Bremssystem umfassend einen Bremsbelag (60) und eine Nutzfahrzeugbremsscheibe nach einem der vorhergehenden Ansprüche,
wobei der Bremsbelag eine Bremsfläche (62) umfasst, welche zumindest eine Aussparung (64) aufweist,
wobei die Aussparung (64) derart dimensioniert bzw. positioniert ist, dass, beim Anlegen des Bremsbelags (60) an der Reibfläche (12), die Bremsfläche (62) die zumindest eine Ausnehmung (40) zumindest bereichsweise überdeckt.

## Claims

1. Commercial vehicle brake disc
comprising at least one friction disc (10) having a friction surface (12),
wherein the friction disc (10) has at least one recess (20) which forms a contour (22) on the friction surface (12), **characterised in that** that the contour (22) or the course of the contour (22) is interrupted by at least one clearance (40),
wherein the clearance (40) has a round, in particular a circular, cross-section.

2. Commercial vehicle brake disc according to claim 1,
wherein the recess (20) has a smaller depth than the clearance (40).

3. Commercial vehicle brake disc according to claim 1 or 2,
wherein the clearance (40) has a center (M), and
where the contour (22) extends through the center (M).

4. Commercial vehicle brake disc according to any of the preceding claims,
wherein the clearance (40) extends substantially perpendicular to the friction surface (12), and penetrates the friction disc (10), in particular completely.

5. Commercial vehicle brake disc according to one of the preceding claims,
wherein the recess (20) in a radial and/or in a tangential direction of the brake disc has a width/length (x₂₀) which is at least twice as large as a width/length (x₄₀) of the clearance (40) in this direction.

6. Commercial vehicle brake disc according to any of the preceding claims,
wherein a plurality of clearances (40) are arranged along a line (L) extending radially from an axis of rotation (D) of the brake disc,
wherein the line (L) is preferably straight, oblique or curved.

7. Commercial vehicle brake disc according to any of the preceding claims,
wherein the friction disc (10) has a further friction surface (12) opposite the friction surface (12), which also has at least one recess (20), and
wherein the recess (20) is positioned or dimensioned such that a clearance (40) interrupts the course of the respective contours (22) on both friction surfaces (12).

8. Commercial vehicle brake disc according to one of the preceding claims,
wherein the friction surface (12) or the friction surfaces (12) have a plurality of recesses (20).

9. Commercial vehicle brake disc according to any of the preceding claims,
wherein the recess (20) is a groove forming a closed circular ring.

10. Commercial vehicle brake disc according to any of the preceding claims,
wherein the recess (20) has a bottom portion (26), and
wherein the friction disc preferably has a projection or shoulder in the region of the base portion (26), which is offset relative to the base portion towards the friction surface (12).

11. Brake system comprising a brake lining (60) and a commercial vehicle brake disc according to one of the preceding claims,
wherein the brake pad comprises a braking surface (62) having at least one clearance (64),
wherein the clearance (64) is dimensioned or positioned in such a way that, when the brake lining (60) is applied to the friction surface (12), the brake surface (62) covers the at least one clearance (40) at least in regions.

## Revendications

1. Disque de frein de véhicule utilitaire, comportant au moins un disque de friction (10) qui présente une surface de friction (12),
dans lequel
le disque de friction (10) présente au moins une cavité (20) qui forme un contour (22) sur la surface de friction (12),
**caractérisé en ce que**
le contour (22) ou l'allure du contour (22) est interrompu(e) par au moins un évidement (40),
l'évidement (40) présentant une section transversale ronde, en particulier circulaire.

2. Disque de frein de véhicule utilitaire selon la revendication 1,
dans lequel
la cavité (20) présente une profondeur inférieure à celle de l'évidement (40).

3. Disque de frein de véhicule utilitaire selon la revendication 1 ou 2,
dans lequel
l'évidement (40) présente un centre (M), et
le contour (22) passe par le centre (M).

4. Disque de frein de véhicule utilitaire selon l'une des revendications précédentes,
dans lequel
l'évidement (40) s'étend sensiblement perpendiculairement à la surface de friction (12) et traverse le disque de friction (10) de préférence complètement.

5. Disque de frein de véhicule utilitaire selon l'une des revendications précédentes,
dans lequel
en direction radiale et/ou en direction tangentielle du disque de frein, la cavité (20) présente une largeur/longueur (x₂₀) qui est au moins du double d'une largeur/longueur (x₄₀) de l'évidement (40) dans ladite direction.

6. Disque de frein de véhicule utilitaire selon l'une des revendications précédentes,
dans lequel
une multitude d'évidements (40) sont disposés le long d'une ligne (L) qui s'étend radialement depuis un axe de rotation (D) du disque de frein,
la ligne (L) s'étend de préférence en ligne droite, en oblique ou en forme d'arc.

7. Disque de frein de véhicule utilitaire selon l'une des revendications précédentes,
dans lequel
le disque de friction (10) présente une autre surface de friction (12) opposée à la surface de friction (12) et présentant également au moins une cavité (20), et
la cavité (20) est positionnée ou dimensionnée de telle sorte qu'un évidement (40) interrompt l'allure des contours respectifs (22) sur les deux surfaces de friction (12).

8. Disque de frein de véhicule utilitaire selon l'une des revendications précédentes,
dans lequel
la surface de friction (12) ou les surfaces de friction (12) présente(nt) une multitude de cavités (20).

9. Disque de frein de véhicule utilitaire selon l'une des revendications précédentes,
dans lequel
la cavité (20) est une rainure qui forme un anneau circulaire fermé.

10. Disque de frein de véhicule utilitaire selon l'une des revendications précédentes,
dans lequel
la cavité (20) présente une portion de fond (26), et
au niveau de la portion de fond (26), le disque de friction présente de préférence un ergot ou un talon qui est décalé par rapport à la portion de fond vers la surface de friction (12).

11. Système de frein comportant une garniture de frein (60) et un disque de frein de véhicule utilitaire selon l'une des revendications précédentes,
dans lequel
la garniture de frein comprend une surface de freinage (62) qui présente au moins une échancrure (64),
l'échancrure (64) est dimensionnée ou positionnée de telle sorte que lors de l'application de la garniture de frein (60) contre la surface de friction (12), la surface de freinage (62) recouvre au moins localement ledit au moins un évidement (40).
